# EUROPÄISCHE PATENTSCHRIFT

(11) **EP 1 782 931 B1**
(45) Veröffentlichungstag und Bekanntmachung des Hinweises auf die Patenterteilung: **06.02.2008**
(21) Anmeldenummer: 05024202.3
(22) Anmeldetag: 07.11.2005
(51) Int. Cl.: B27D 5/00, B23C 3/12, B23C 5/02

(54) **Kantenfräsmaschine**
Edge milling machine
Machine à fraiser les bords

(43) Veröffentlichungstag der Anmeldung: 09.05.2007
(73) Patentinhaber: Brandt Kantentechnik GmbH, 32657 Lemgo (DE)
(72) Erfinder: Brinkmeier, Michael, 32657 Lemgo (DE)
(74) Vertreter: HOFFMANN EITLE

(56) Entgegenhaltungen:
- EP-A- 1 504 837
- DE-A1- 4 030 138
- DE-C1- 10 124 307
- DE-C1- 10 229 775
- US-A- 2 839 107
- PATENT ABSTRACTS OF JAPAN Bd. 1999, Nr. 12, 29. Oktober 1999 (1999-10-29) -& JP 11 188521 A (SHINX LTD), 13. Juli 1999 (1999-07-13)

## Beschreibung

### Technisches Gebiet

Die Erfindung betrifft eine Kantenfräsmaschine zum Bündigfräsen von Kanten an den Schmalseiten plattenförmiger Werkstücke, die bevorzugt im wesentlichen aus Holz, Holzwerkstoffen oder dergleichen bestehen, mit einem Bündigfräsaggregat, das ein Fräswerkzeug und einen Antrieb aufweist, mittels dessen das Fräswerkzeug um eine Drehachse antreibbar ist.

### Stand der Technik

Kantenfräsmaschinen der eingangs genannten Art werden im Bereich der Herstellung von Möbelplatten dazu eingesetzt, die Überstände angeleimter Kanten bündig zu der Oberfläche des Werkstücks zu fräsen. So offenbart beispielsweise die DE 40 30 138 C2 eine Maschine zum Anbringen und Bündigfräsen von Kantenstreifen.

Um beim Bündigfräsen unterschiedliche Übergänge zwischen Kante und Werkstückoberfläche, insbesondere verschiedene Krümmungsradien, zu ermöglichen, schlägt die DE 101 24 307 C1 ein Kantenfräsaggregat mit einem Stufenfräser vor. Für einen Wechsel zwischen den verschiedenen Fräsabschnitten des Stufenfräsers muss dieser in zwei Achsrichtungen verfahren werden, was eine aufwändige Verstellmechanik erfordert.

Ferner offenbart die US 2,839,107 ein Fräswerkzeug mit zwei Schneidkanten, die dazu ausgelegt sind, zwischen einem Planfräsen und einem Fasefräsen eines Kantenüberstandes wechseln zu können. Hierzu muss jedoch das gesamte Werkzeug um 90° verschwenkt sowie entlang zumindest einer Achse verschoben werden, was eine aufwändige Mechanik oder umständliche Umbauarbeiten erfordert.

Ferner offenbart die JP-A-11188521 eine Kantenfräsmaschine mit einem schwenkbaren und verfahrbaren Pressaggregat.

### Darstellung der Erfindung

Es ist daher Aufgabe der vorliegenden Erfindung, eine Kantenfräsmaschine der eingangs genannten Art bereitzustellen, die einen vereinfachten Wechsel zwischen unterschiedlichen Bearbeitungsarten der Kante ermöglicht.

Diese Aufgabe wird erfindungsgemäß durch eine Kantenfräsmaschine mit den Merkmalen von Anspruch 1 gelöst. Vorteilhafte Weiterbildungen der Erfindung sind in den abhängigen Ansprüchen angegeben.

Der Erfindung liegt der Gedanke zugrunde, das Bündigfräsaggregat einer Kantenfräsmaschine derart auszugestalten und anzuordnen, dass für einen Wechsel zwischen unterschiedlichen Bearbeitungsarten der Kante (insbesondere Plan-, Fase- und Radiusfräsen) lediglich ein Verschwenken des Bündigfräsaggregats bzw. des Fräswerkzeuges um eine sich parallel zur Förderrichtung erstreckende Achse erforderlich ist. Zu diesem Zweck ist erfindungsgemäß vorgesehen, dass die Schwenkachse im wesentlichen stationär angeordnet ist, und dass gleichzeitig das Fräswerkzeug derart ausgestaltet ist, dass durch ein bloßes Verschwenken des Bündigfräsaggregates um die Schwenkachse zwischen mindestens zwei unterschiedlichen Bearbeitungsarten umgeschaltet werden kann, die ausgewählt sind aus der Gruppe bestehend aus Planfräsen, Fasefräsen und Radiusfräsen.

Auf diese Weise kann bei der vorliegenden Erfindung auf aufwändige Mechanismen zum Verstellen des Bündigfräsaggregats entlang einer oder gar mehrerer Achsen verzichtet werden.

Dies führt nicht nur zu einer deutlich einfacheren Konstruktion der Kantenfräsmaschine, sondern auch zu einer erheblich vereinfachten Bedienung sowie einer verbesserten Präzision bzw. Fehlervermeidung beim Wechseln zwischen unterschiedlichen Bearbeitungsarten.

Das Merkmal, wonach die Schwenkachse im wesentlichen stationär angeordnet ist, bezieht sich auf die ortsfeste Lage der Schwenkachse während des Wechsels zwischen unterschiedlichen Bearbeitungsarten. Dies schließt jedoch nicht aus, dass beispielsweise das Bündigfräsaggregat als Ganzes in Bezug auf die Fördereinrichtung oder andere Bezugspunkte in üblicher Weise justierbar ist, beispielsweise um die Kantenfräsmaschine an veränderte Werkstückabmessungen, Kantendicken oder dergleichen anzupassen. Zu diesem Zweck kann das Bündigfräsaggregat beispielsweise mit einer festen Schwenkachse auf einem Grundgestell montiert sein, das wiederum über Justiermittel mit der Fördereinrichtung verbunden ist.

Gemäß einer Weiterbildung der vorliegenden Erfindung ist vorgesehen, dass die Drehachse des Bündigfräswerkzeugs in einem Winkelbereich schwenkbar ist, in welchem die Drehachse zu der Horizontalen Winkel einnimmt, die größer sind als 10°, bevorzugt größer sind als 20°. So haben die Erfinder überraschenderweise festgestellt, dass sich die erfindungsgemäße Abstimmung zwischen Fräswerkzeug und Lage der Schwenkachse besonders einfach erzielen lässt, wenn der Schwenkbereich des Bündigfräswerkzeugs sich nicht in die Horizontale erstreckt, d.h. in die Ebene des zu fördernden und zu bearbeitenden, plattenförmigen Werkstücks. Dies bedeutet, dass sich das Bündigfräswerkzeug auch bei einem Planfräsen der Kante nicht in der Horizontalen befindet, sondern hierzu bzw. zur Fräsebene der Planfräsbearbeitung abgewinkelt ist.

Darüber hinaus ist gemäß einer Weiterbildung der vorliegenden Erfindung vorgesehen, dass die Schwenkachse des Fräsaggregats von der Drehachse des Werkzeugs beabstandet ist. Hierdurch ergibt sich ein deutlich größerer Gestaltungsspielraum bei der Abstimmung der Lage der Schwenkachse auf die Ausgestaltung des Fräswerkzeugs, um den gewünschten Effekt eines Wechsels zwischen den unterschiedlichen Bearbeitungsarten durch bloßes Verschwenken des Bündigfräsaggregats zu erzielen.

Das Fräswerkzeug kann im Rahmen der vorliegenden Erfindung auf unterschiedlichste Art und Weise ausgestaltet sein. Gemäß einer Weiterbildung der vorliegenden Erfindung ist jedoch vorgesehen, dass das Fräswerkzeug einen Fräskopf aufweist, an dessen äußerem Umfang mindestens ein Schneidelement angeordnet ist. Um bei einem derartigen Schneidelement einen Wechsel zwischen unterschiedlichen Fräsbearbeitungsarten zu ermöglichen, ist gemäß der Weiterbildung der Erfindung vorgesehen, dass das mindestens eine Schneidelement eine Schneide aufweist, die mindestens einen geradlinigen Abschnitt und mindestens einen gekrümmten Abschnitt aufweist. Dabei ist es besonders bevorzugt, dass die Schneide mindestens zwei geradlinige Abschnitte aufweist, zwischen denen der gekrümmte Abschnitt vorgesehen ist. Auf diese Weise kann im Zuge eines Verschwenkens des Bündigfräsaggregats ausgehend beispielsweise von einem Fasefräsen mit dem ersten geradlinigen Abschnitt zu einem Radiusfräsen mit dem gekrümmten Abschnitt und weiter zu einem Planfräsen mit dem zweiten geradlinigen Abschnitt umgeschaltet werden.

Die Ausrichtung der geradlinigen bzw. gekrümmten Abschnitte der Schneide hängt primär von der Lage der Drehachse, der Lage der Schwenkachse sowie der gewünschten Stellung der Fräsbearbeitung ab. Im Hinblick auf den oben diskutierten, bevorzugten Schwenkbereich des Bündigfräswerkzeugs ist gemäß einer Weiterbildung der vorliegenden Erfindung vorgesehen, dass sich der mindestens eine geradlinige Abschnitt in einer von der Drehachse des Werkzeugs abweichenden Richtung erstreckt.

Um während der Fräsbearbeitung eine stabile und positionsgenaue Förderung der zu bearbeitenden Werkstücke zu ermöglichen, ist gemäß einer Weiterbildung der vorliegenden Erfindung vorgesehen, dass sie ferner eine erste und/oder eine zweite Stützrolle aufweist, die dazu vorgesehen sind, auf einer zu der Kante benachbarten Oberfläche des Werkstücks bzw. auf der Kante abzurollen. Dabei ist es besonders bevorzugt, dass die erste und/oder die zweite Stützrolle in Bezug auf den Schwenkpunkt des Fräsaggregats verstellbar sind. Hierdurch kann die Kantenfräsmaschine an verschiedene Werkstück- und Kantengeometrien angepasst werden, um stets ein optimales Bearbeitungsergebnis zu erzielen.

Gemäß einer weiteren Zielrichtung stellt die vorliegende Erfindung gemäß Anspruch 10 ein Bündigfräsaggregat für eine Kantenfräsmaschine bereit, wie sie oben stehend beschrieben worden ist. Das Bündigfräsaggregat besitzt ein Fräswerkzeug und einen Antrieb, mittels dessen das Fräswerkzeug um eine Drehachse antreibbar ist. Ferner weist das Bündigfräsaggregat mindestens ein Lagerungselement auf, mittels dessen das Bündigfräsaggregat um eine von der Drehachse abweichende, im Wesentlichen stationäre Schwenkachse schwenkbar ist. Auf diese Weise wird ein Bündigfräsaggregat bereitgestellt, das optimal in eine erfindungsgemäße Kantenfräsmaschine integriert werden kann, ohne dass für ein Wechseln zwischen unterschiedlichen Kantenfräsbearbeitungsarten zusätzlich eine Verstellmöglichkeit entlang einer linearen Achse vorgesehen werden muss.

### Kurze Beschreibung der Zeichnungen

- Fig. 1: zeigt schematisch eine Seitenansicht einer Ausführungsform einer Kantenfräsmaschine gemäß der vorliegenden Erfindung;
- Fig. 2: zeigt schematisch eine Perspektivansicht eines Fräswerkzeugs gemäß der vorliegenden Erfindung;
- Fig. 3: zeigt schematisch eine Seitenansicht eines Schneidelements gemäß der vorliegenden Erfindung;
- Fig. 4: zeigt schematisch verschiedene Bearbeitungsstellungen eines Fräskopfes in Bezug auf ein zu bearbeitendes Werkstück.

### Ausführliche Beschreibung bevorzugter Ausführungsformen

Bevorzugte Ausführungsformen der vorliegenden Erfindung werden nachfolgend ausführlich unter Bezugnahme auf die begleitenden zeichnungen beschrieben.

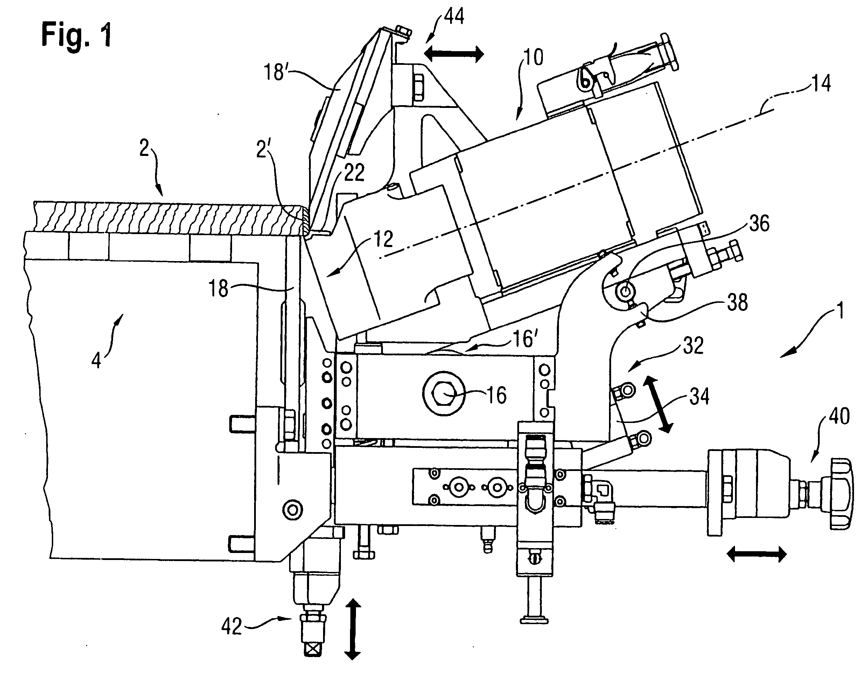

Fig. 1 zeigt schematisch eine Seitenansicht einer Ausführungsform einer Kantenfräsmaschine 1 gemäß der vorliegenden Erfindung. Die Kantenfräsmaschine 1 dient zum Bündigfräsen von Kanten 2', die an den Schmalseiten plattenförmiger Werkstücke 2 zunächst mit einem Überstand angeleimt oder auf sonstige Weise vorgesehen werden. Derartige plattenförmige Werkstücke kommen im Bereich der Möbelindustrie häufig zum Einsatz, wie beispielsweise Korpusteile, Küchenfronten o. dgl. und bestehen häufig aus Holz, Holzwerkstoffen o. dgl.

Wie in Fig. 1 zu erkennen ist, umfasst die erfindungsgemäße Kantenfräsmaschine ein Bündigfräsaggregat 10, das ein Fräswerkzeug 12 und einen nicht ausdrücklich gezeigten Antrieb aufweist, mittels dessen das Fräswerkzeug 12 um die Drehachse 14 antreibbar ist.

Ferner umfasst die erfindungsgemäße Kantenfräsmaschine 1 eine Fördereinrichtung 4, beispielsweise in Form eines Riemen-oder Kettenförderers, die sich im Wesentlichen senkrecht zur Zeichenebene von Fig. 1 erstreckt und dazu dient, ein zu bearbeitendes Werkstück 2 an dem Bündigfräsaggregat 10 in einer Förderrichtung entlang zu fördern. Im Rahmen der vorliegenden Erfindung ist es jedoch ebenso möglich, dass sich zusätzlich zu einer Förderung des Werkstücks 2 mittels der Fördereinrichtung 4 auch das Bündigfräsaggregat 10 in bzw. entgegen der Förderrichtung bewegt, oder dass das Werkstück 2 stationär angeordnet ist und lediglich das Bündigfräsaggregat 10 während des Bündigfräsens bewegt wird.

Das Bündigfräsaggregat 10 ist in der vorliegenden Ausführungsform über ein Lagerungselement 16', beispielsweise in Form eines Drehlagers, mit einem Tragrahmen 32 verbunden, der wiederum über noch zu beschreibende Verbindungselemente und Justiereinrichtungen mit der Fördereinrichtung 4 verbunden ist. Das Lagerungselement 16' definiert eine Schwenkachse 16 für das Bündigfräsaggregat 10, die sich im Wesentlichen parallel zur Förderrichtung erstreckt und im Wesentlichen stationär angeordnet ist. Dabei besitzt das Bündigfräsaggregat in der vorliegenden Ausführungsform einen Schwenkbereich, in welchem die Drehachse 14 zu der Horizontalen (d.h. zur Förderebene der Fördereinrichtung 4 bzw. des plattenförmigen Werkstücks 2) verschiedene Winkel einnehmen kann, die jedoch größer sind als 10°, bevorzugt größer sind als 20°. Dieser Schwenkbereich ist in der vorliegenden Ausführungsform durch einen an dem Bündigfräsaggregat 10 angebrachten Zapfen 36 definiert, der sich zwischen einem gabelartigen Anschlag 38 bewegen kann. Es ist jedoch zu beachten, dass der jeweilige Schwenkbereich im Rahmen der vorliegenden Erfindung prinzipiell keinen Beschränkungen unterliegt und auch horizontale und vertikale Positionen der Drehachse 14 umfassen kann. Ferner ist die Winkelangabe "größer als 10°" bzw. "größer als 20°" dahingehend zu verstehen, dass der Betrag des Winkels größer als 10° bzw. 20° sein soll.

Für eine automatisierte Verschwenkbewegung des Bündigfräsaggregats 10 innerhalb des so definierten Schwenkbereichs umfasst die Kantenfräsmaschine 1 ferner einen Stellantrieb 34.

Ferner umfasst die erfindungsgemäße Kantenfräsmaschine in der vorliegenden Ausführungsform eine erste Stützrolle 18 und eine zweite Stützrolle 18', wobei die erste Stützrolle 18 dazu vorgesehen ist, auf der Unterseite des Werkstücks 2 benachbart zu der zu bearbeitenden Kante 2' abzurollen und somit die Höhenlage des zu bearbeitenden Werkstücks bzw. der zu bearbeitenden Kante zu definieren. In ähnlicher Weise rollt die zweite Stützrolle 18' auf der zu bearbeitenden Kante 2' ab, um hierdurch die horizontale Ausrichtung der zu bearbeitenden Kante 2' während der Bearbeitung zu definieren.

Wie in Fig. 1 ebenso zu erkennen ist, umfasst die Kantenfräsmaschine 1 in der vorliegenden Ausführungsform ferner eine erste Justiereinrichtung 40, eine zweite Justiereinrichtung 42 und eine dritte Justiereinrichtung 44. Diese dienen dazu, die Feinpositionierung des Tragrahmens 32 und somit des Bündigfräsaggregats 10 an unterschiedliche Abmessungen des zu bearbeitenden Werkstücks 2 bzw. der zu bearbeitenden Kante 2' anzupassen. Genauer gesagt ermöglicht die erste Justiereinrichtung 40 eine Einstellung der Kantendicke bei einer Radius- und Fasefräsbearbeitung, während die zweite Justiereinrichtung 42 bei einer Bündigfräsbearbeitung zur Anpassung eines etwaigen Kantenüberstandes eingesetzt werden kann, und während schließlich die dritte Justiereinrichtung 44 eine Kantendickeneinstellung und Korrektur bei einer Bündigfräsbearbeitung ermöglicht.

Das Fräswerkzeug 12 ist in der vorliegenden Ausführungsform derart ausgestaltet, dass durch ein bloßes Verschwenken des Bündigfräsaggregats 10 um die Schwenkachse 16 zwischen drei unterschiedlichen Bearbeitungsarten umgeschaltet werden kann, nämlich Planfräsen, Fasefräsen und Radiusfräsen.

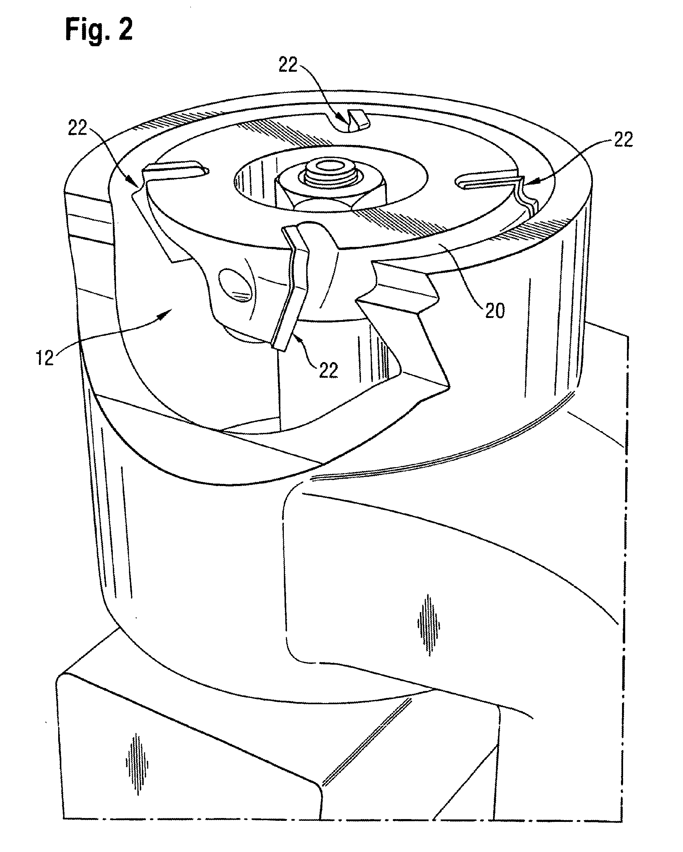

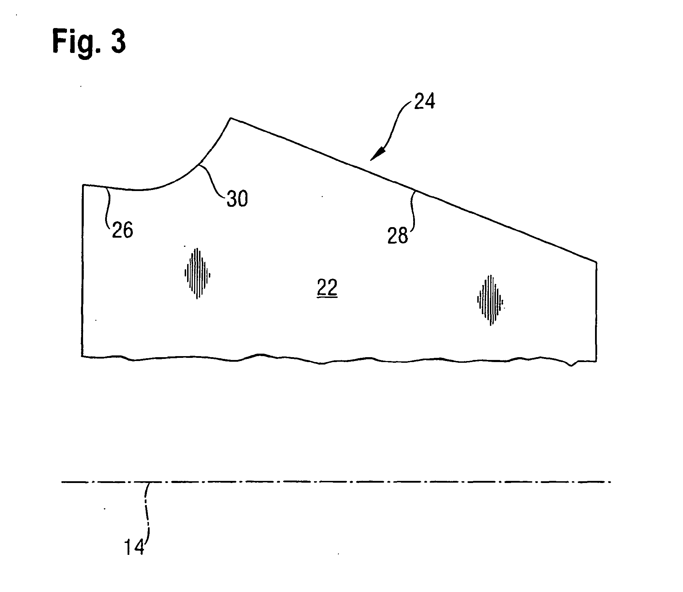

Der Aufbau des Fräswerkzeugs 12 ist in Fig. 2 schematisch dargestellt. Das Fräswerkzeug 12 umfasst einen Fräskopf 20, an dessen äußerem Umfang in der vorliegenden Ausführungsform vier auswechselbare Schneidelemente 22 angeordnet sind. Die Ausgestaltung der Schneidelemente ist in Fig. 3 in einer Seitenansicht näher gezeigt. Die Schneidelemente 22 umfassen jeweils eine Schneide 24, die in der vorliegenden Ausführungsform drei Abschnitte aufweist, nämlich einen ersten geradlinigen Abschnitt 26, einen zweiten geradlinigen Abschnitt 28 und dazwischen einen gekrümmten Abschnitt 30. In Fig. 3 ist ferner schematisch die Rotationsachse 14 des Bearbeitungswerkzeugs 12 eingezeichnet. Wie in Fig. 3 zu erkennen ist, erstrecken sich sowohl der erste geradlinige Abschnitt 26 als auch der zweite geradlinige Abschnitt 28 in der vorliegenden Ausführungsform in einer von der Drehachse 14 abweichenden Richtung. Dabei entspricht der Winkel des für ein Planfräsen vorgesehenen, zweiten geradlinigen Abschnitts 28 gegenüber der Drehachse 14 demjenigen Winkel, der die Drehachse beim Planfräsen gegenüber der Horizontalen bzw. gegenüber der Werkstückförderebene einnimmt.

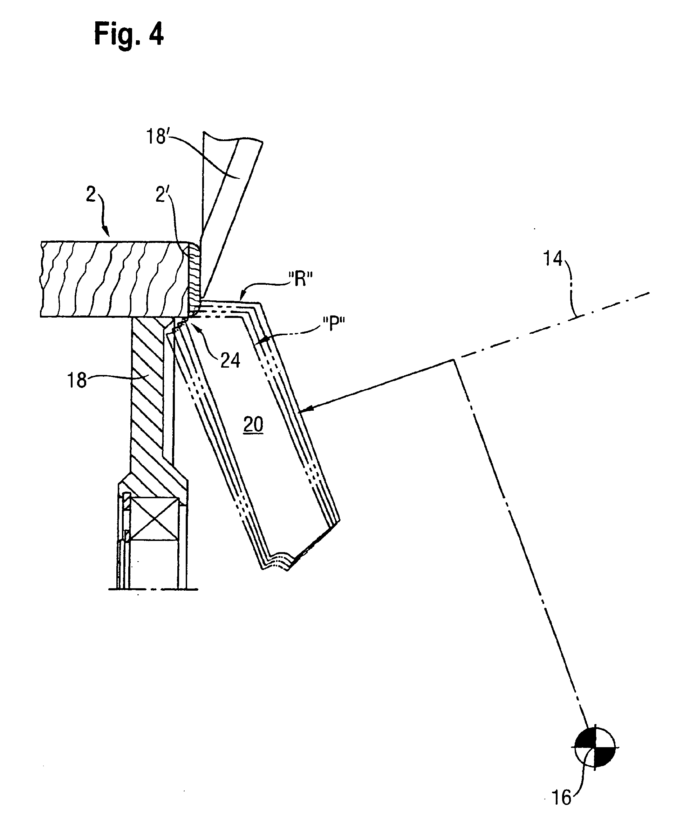

Der Betrieb der erfindungsgemäßen Kantenfräsmaschine 1 bzw. des erfindungsgemäßen Bündigfräsaggregats 10 wird nachfolgend unter Bezugnahme auf Fig. 4 beschrieben, die schematisch verschiedene Bearbeitungsstellungen des Fräskopfes 20 in Bezug auf das zu bearbeitende Werkstück 2 bzw. die zu bearbeitende Kante 2' zeigt. Fig. 4 zeigt zunächst eine Stellung des Fräskopfes 20 bzw. der zugehörigen Schneide 24, die mit "P" bezeichnet ist. In dieser Stellung wird der zweite geradlinige Abschnitt 28 (vgl. Fig. 3) der Schneide 24 für ein Planfräsen der Kante 2' eingesetzt. In dieser Stellung entspricht die Neigung der Drehachse 14 gegenüber der Horizontalen der Neigung der Drehachse 14 gegenüber dem ersten geradlinigen Abschnitt 28.

Ausgehend von dieser Stellung kann das Bündigfräsaggregat 10 (in Fig. 4 nicht gezeigt) um den Schwenkpunkt 16 herum in die in Fig. 4 gezeigte Stellung "R" geschwenkt werden. In dieser Stellung kommt der gekrümmte Abschnitt 30 der Schneide 24 zum Einsatz, um an der Kante 2' eine Radiusfräsbearbeitung vorzunehmen.

Obgleich in Fig. 4 nicht gezeigt, kann ausgehend von der Stellung "R" das Bündigfräsaggregat 10 mit dem zugehörigen Fräskopf 20 weiter im Uhrzeigersinn um den Schwenkpunkt 16 herum verschwenkt werden, um auf diese Weise den ersten geradlinigen Abschnitt 26 der Schneide 24 in eine Stellung zum Fasefräsen der Kante 2' zu bringen. Zusammenfassend kann somit durch ein bloßes Verschwenken des Bündigfräsaggregats 10 bzw. des Fräswerkzeugs 12 um den Schwenkpunkt 16 herum zwischen den drei Fräsbearbeitungsarten Planfräsen, Radiusfräsen und Fasefräsen gewechselt werden, und zwar ggf. auch während der Fräsbearbeitung. Im Zuge dieser Verstellung ist keine zu der Schwenkbewegung überlagerte Linearverschiebung des Fräswerkzeugs erforderlich.

## Patentansprüche

1. Kantenfräsmaschine (1) zum Bündigfräsen von Kanten (2') an den Schmalseiten plattenförmiger Werkstücke (2), die bevorzugt im wesentlichen aus Holz, Holzwerkstoffen oder dergleichen bestehen, umfassend:
ein Bündigfräsaggregat (10), das ein Fräswerkzeug (12) und einen Antrieb aufweist, mittels dessen das Fräswerkzeug (12) um eine Drehachse (14) antreibbar ist, und
eine Fördereinrichtung (4) zur Erzeugung einer Relativbewegung zwischen dem Bündigfräsaggregat (10) und der zu fräsenden Kante (2') in einer Förderrichtung,
wobei das Bündigfräsaggregat (10) derart in der Kantenfräsmaschine (1) angeordnet ist, dass die Drehachse (14) des Fräswerkzeuges um eine Schwenkachse (16) schwenkbar ist, die sich im wesentlichen parallel zur Förderrichtung erstreckt und im wesentlichen stationär angeordnet ist, und
wobei das Fräswerkzeug (12) derart ausgestaltet ist, dass durch ein bloßes Verschwenken des Bündigfräsaggregates (10) um die Schwenkachse (16) zwischen mindestens zwei unterschiedlichen Bearbeitungsarten umgeschaltet werden kann, die ausgewählt sind aus der Gruppe bestehend aus Planfräsen, Fasefräsen und Radiusfräsen.

2. Kantenfräsmaschine nach Anspruch 1, **dadurch gekennzeichnet, dass** die Drehachse (14) des Bündigfräswerkzeuges in einem Winkelbereich schwenkbar ist, in welchem die Drehachse (14) zu der Horizontalen Winkel einnimmt, die größer sind als 10°, bevorzugt größer sind als 20°.

3. Kantenfräsmaschine nach Anspruch 1 oder 2, **dadurch gekennzeichnet, dass** die Schwenkachse (16) des Fräsaggregats von der Drehachse (14) des Werkzeuges beabstandet ist.

4. Kantenfräsmaschine nach einem der vorhergehenden Ansprüche, **dadurch gekennzeichnet, dass** das Fräswerkzeug (12) einen Fräskopf (20) aufweist, an dessen äußerem Umfang mindestens ein Schneidelement (22) angeordnet ist.

5. Kantenfräsmaschine nach Anspruch 4, **dadurch gekennzeichnet, dass** das mindestens eine Schneidelement (22) eine Schneide (24) aufweist, die mindestens einen geradlinigen Abschnitt (26, 28) und mindestens einen gekrümmten Abschnitt (30) aufweist.

6. Kantenfräsmaschine nach Anspruch 5, **dadurch gekennzeichnet, dass** die Schneide (24) den mindestens einen (26) und einen weiteren (28) geradlinigen Abschnitt und zwischen diesen beiden geradlinigen Abschnitten einen gekrümmten Abschnitt (30) aufweist.

7. Kantenfräsmaschine nach Anspruch 5 oder 6, **dadurch gekennzeichnet, dass** der mindestens eine geradlinige Abschnitt (26, 28) sich in einer von der Drehachse (14) des Werkzeugs (12) abweichenden Richtung erstreckt.

8. Kantenfräsmaschine nach einem der vorhergehenden Ansprüche, **dadurch gekennzeichnet, dass** sie ferner eine erste und/oder eine zweite Stützrolle (18, 18') aufweist, die dazu vorgesehen sind, auf einer zu der Kante (2') benachbarten Oberfläche des Werkstücks (2) bzw. auf der Kante (2') abzurollen.

9. Kantenfräsmaschine nach Anspruch 8, **dadurch gekennzeichnet, dass** die erste und/oder die zweite Stützrolle (18, 18') in Bezug auf den Schwenkpunkt (16) des Fräsaggregats (10) verstellbar sind.

10. Bündigfräsaggregat (10) für eine Kantenfräsmaschine (1) nach einem der vorhergehenden Ansprüche, mit
einem Fräswerkzeug (12) und einem Antrieb, mittels dessen das Fräswerkzeug (12) um eine Drehachse (14) antreibbar ist,
**dadurch gekennzeichnet, dass**
das Bündigfräsaggregat (10) mindestens ein Lagerungselement (16') aufweist, mittels dessen das Bündigfräsaggregat (10) um eine von der Drehachse abweichende, im wesentlichen stationäre Schwenkachse (16) schwenkbar ist und
das Fräswerkzeug (12) derart ausgestaltet ist, dass durch ein bloßes Verschwenken des Bündigfräsaggregates (10) um die Schwenkachse (16) zwischen mindestens zwei unterschiedlichen Bearbeitungsarten umgeschaltet werden kann, die ausgewählt sind aus der Gruppe bestehend aus Planfräsen, Fasefräsen und Radiusfräsen

11. Bündigfräsaggregat nach Anspruch 10, **dadurch gekennzeichnet, dass** das Fräswerkzeug (12) einen Fräskopf (20) aufweist, an dessen äußerem Umfang mindestens ein Schneidelement (22) angeordnet ist.

12. Bündigfräsaggregat nach Anspruch 10 oder 11, **dadurch gekennzeichnet, dass** das mindestens eine Schneidelement (22) eine Schneide (24) aufweist, die mindestens einen geradlinigen Abschnitt (26, 28) und mindestens einen gekrümmten Abschnitt (30) aufweist.

13. Bündigfräsaggregat nach einem der Ansprüche 10 bis 12, **dadurch gekennzeichnet, dass** die Schneide (24) den mindestens einen (26) und einen weiteren (28) geradlinigen Abschnitt und zwischen diesen beiden geradlinigen Abschnitten einen gekrümmten Abschnitt (30) aufweist.

14. Bündigfräsaggregat nach einem der Ansprüche 10 bis 13, **dadurch gekennzeichnet, dass** der mindestens eine geradlinige Abschnitt (30) sich in einer von der Drehachse (14) des Werkzeugs (12) abweichenden Richtung erstreckt.

15. Bündigfräsaggregat nach einem der Ansprüche 10 bis 14, **dadurch gekennzeichnet, dass** das Lagerungselement (11) von der Drehachse (14) des Werkzeuges (12) beabstandet ist.

16. Bündigfräsaggregat nach einem der Ansprüche 10 bis 15, **dadurch gekennzeichnet, dass** das Lagerungselement (11) zum Bilden einer Schwenkachse (16) ausgebildet ist, die zur Drehachse (14) im Wesentlichen rechtwinklig ist.

## Claims

1. Edge trimming machine (1) for flush trimming of edges (2') at the narrow sides of panel-like workpieces (2), which preferably consist essentially of wood, wood materials or the like, comprising:
a flush trimming unit (10), which has a trimming tool (12) and a drive, by means of which the trimming tool (12) can be driven about an axis of rotation (14), and
a conveying device (4) for producing a relative movement between the flush trimming unit (10) and the edge (2') to be trimmed in one conveying direction,
wherein the flush trimming unit (10) is arranged in the edge trimming machine (1) such that the axis of rotation (14) of the trimming tool can be pivoted about a pivoting axis (16), which extends essentially parallel to the conveying direction and is arranged to be essentially stationary, and
wherein the trimming tool (12) is designed such that switching between at least two different types of machining, which are selected from the group consisting of flat trimming, bevel trimming and radius trimming, may be carried out by mere pivoting of the flush trimming unit (10) about the pivoting axis (16).

2. Edge trimming machine according to claim 1, **characterised in that** the axis of rotation (14) of the flush trimming tool can be pivoted in an angular range, in which the axis of rotation (14) occupies angles to the horizontal which are greater than 10°, preferably are greater than 20°.

3. Edge trimming machine according to claim 1 or 2, **characterised in that** the pivoting axis (16) of the trimming unit is spaced from the axis of rotation (14) of the tool.

4. Edge trimming machine according to one of the preceding claims, **characterised in that** the trimming tool (12) has a trimming head (20), on the outer periphery of which is arranged at least one cutting element (22).

5. Edge trimming machine according to claim 4, **characterised in that** the at least one cutting element (22) has a blade (24) which has at least one linear section (26, 28) and at least one curved section (30).

6. Edge trimming machine according to claim 5, **characterised in that** the blade (24) has the at least one (26) linear section and a further (28) linear section and between these two linear sections, a curved section (30).

7. Edge trimming machine according to claim 5 or 6, **characterised in that** the at least one linear section (26, 28) extends in a direction deviating from the axis of rotation (14) of the tool (12).

8. Edge trimming machine according to one of the preceding claims, **characterised in that** it also has a first and/or a second supporting roller (18, 18'), which are thus provided to roll on a surface of the tool (2) adjacent to the edge (2') or on the edge (2').

9. Edge trimming machine according to claim 8, **characterised in that** the first and/or the second supporting roller (18, 18') can be adjusted with respect to the pivoting point (16) of the trimming unit (10).

10. Flush trimming unit (10) for an edge trimming machine (1) according to one of the preceding claims, having
a trimming tool (12) and a drive, by means of which the trimming tool (12) can be driven about an axis of rotation (14),
**characterised in that**
the flush trimming unit (10) has at least one bearing element (16'), by means of which the flush trimming unit (10) can be pivoted about an essentially stationary pivoting axis (16) which deviates from the axis of rotation and
the trimming tool (12) is designed such that switching between at least two different types of machining, which are selected from the group consisting of flat trimming, bevel trimming and radius trimming, may be carried out by mere pivoting of the flush trimming unit (10) about the pivoting axis (16).

11. Flush trimming unit according to claim 10, **characterised in that** the trimming tool (12) has a trimming head (20), on the outer periphery of which is arranged at least one cutting element (22).

12. Flush trimming unit according to claim 10 or 11, **characterised in that** the at least one cutting element (22) has a blade (24), which has at least one linear section (26, 28) and at least one curved section (30).

13. Flush trimming unit according to one of claims 10 to 12, **characterised in that** the blade (24) has the at least one (26) linear section and a further (28) linear section and between these two linear sections, a curved section (30).

14. Flush trimming unit according to one of claims 10 to 13, **characterised in that** the at least one linear section (30) extends in a direction deviating from the axis of rotation (14) of the tool (12).

15. Flush trimming unit according to one of claims 10 to 14, **characterised in that** the bearing element (11) is spaced from the axis of rotation (14) of the tool (12).

16. Flush trimming unit according to one of claims 10 to 15, **characterised in that** the bearing element (11) is designed to form a pivoting axis (16), which is essentially at right-angles to the axis of rotation (14).

## Revendications

1. Machine à chanfreiner (1) pour chanfreiner à chant les arêtes (2') des côtés étroits de pièces (2) en forme de plaque qui sont constituées de préférence essentiellement de bois, de matériaux de bois ou similaires, comportant :
une machine de fraisage à chant qui présente un outil de fraisage (12) et un entraînement, au moyen duquel l'outil de fraisage (12) peut être entraîné autour d'un axe de rotation (14), et
un dispositif de transport (4) qui crée un déplacement relatif entre la machine (10) de fraisage à chant et l'arête (2') à chanfreiner dans une direction de transport,
la machine (10) de fraisage à chant étant disposée dans la machine de chanfreinage (1) de telle sorte que l'axe de rotation (14) de l'outil de fraisage puisse pivoter autour d'un axe de pivotement (16) qui s'étend sensiblement parallèle à la direction du transport et disposé en position sensiblement fixe, et
l'outil de fraisage (12) étant configuré de telle sorte que par simple pivotement de la machine (10) de fraisage à chant autour de l'axe de pivotement (16), on puisse passer entre au moins deux types de traitement différents qui sont sélectionnés parmi le fraisage plan, le chanfreinage et le chanfreinage en arc de cercle.

2. Machine à chanfreiner selon la revendication 1, **caractérisée en ce que** l'axe de rotation (14) de l'outil de fraisage à chant est susceptible de pivoter dans une plage angulaire dans laquelle l'axe de rotation (14) fait, par rapport à l'horizontale, des angles qui sont supérieurs à 10°, de préférence sont supérieurs à 20°.

3. Machine à chanfreiner selon la revendication 1 ou 2, **caractérisée en ce que** l'axe de pivotement (16) de la machine de fraisage est espacé de l'axe de rotation (14) de l'outil.

4. Machine à chanfreiner selon l'une des revendications précédentes, **caractérisée en ce que** l'outil de fraisage (12) présente une tête de fraisage (20), sur la périphérie extérieure de laquelle est disposé au moins un élément de coupe (22).

5. Machine à chanfreiner selon la revendication 4, **caractérisée en ce que** le au moins un élément de coupe (22) présente un tranchant (24), présentant au moins un tronçon rectiligne (26, 28) et au moins un tronçon incurvé (30).

6. Machine à chanfreiner selon la revendication 5, **caractérisée en ce que** le tranchant (24) présente le au moins un tronçon rectiligne (26) et un autre tronçon rectiligne (28), et présente un tronçon incurvé (30) entre ces deux tronçons rectilignes.

7. Machine à chanfreiner selon la revendication 5 ou 6, **caractérisée en ce que** le au moins un tronçon rectiligne (26, 28) s'étend dans une direction s'écartant de l'axe de rotation (14) de l'outil (12).

8. Machine à chanfreiner selon l'une des revendications précédentes, **caractérisée en ce qu'**elle présente en outre un premier galet d'appui et/ou un deuxième galet d'appui (18, 18'), prévu pour rouler sur une surface, voisine de l'arête (2'), de la pièce (2), ou pour rouler sur l'arête (2').

9. Machine à chanfreiner selon la revendication 8, **caractérisée en ce que** le premier et/ou le deuxième galet d'appui (18, 18') sont réglables par rapport au centre de pivotement (16) de la machine de fraisage (10).

10. Machine de fraisage à chant (10) pour une machine à chanfreiner (1) selon l'une des revendications précédentes, comprenant :
un outil de fraisage (12) et un entraînement, au moyen duquel l'outil de fraisage (12) est susceptible d'être entraîné autour d'un axe de rotation (14),
**caractérisée en ce que**
la machine de fraisage à chant (10) présente au moins un élément de montage en palier (16'), au moyen duquel la machine de fraisage à chant (10) est susceptible de pivoter autour d'un axe de pivotement, s'écartant de l'axe de rotation et disposé en position sensiblement fixe, et
l'outil de fraisage (12) est réalisé de manière que, par un simple pivotement de la machine (10) de fraisage à chant autour de l'axe de pivotement (16), on puisse commuter entre au moins deux types d'usinage différents, sélectionnés dans le groupe composé du fraisage plan, du chanfreinage et du chanfreinage en arc de cercle.

11. Machine de fraisage à chant selon la revendication 10, **caractérisée en ce que** l'outil de fraisage (12) présente une tête de fraisage (20), sur la périphérie extérieure de laquelle est disposé au moins un élément coupant (22).

12. Machine de fraisage à chant selon la revendication 10 ou 11, **caractérisée en ce que** le au moins un élément coupant (22) présente un tranchant (24), qui présente au moins un tronçon rectiligne (26, 28) et au moins un tronçon incurvé (30).

13. Machine de fraisage à chant selon l'une des revendications 10 à 12, **caractérisée en ce que** le tranchant (24) présente le au moins un tronçon rectiligne (26) et un autre tronçon rectiligne (28) et, entre ces deux tronçons rectilignes, un tronçon incurvé (30).

14. Machine de fraisage à chant selon l'une des revendications 10 à 13, **caractérisée en ce que** le au moins un tronçon rectiligne (30) s'étend en une direction s'écartant de l'axe de rotation (14) de l'outil (12).

15. Machine de fraisage à chant selon l'une des revendications 10 à 14, **caractérisée en ce que** l'élément de montage en palier (11) est espacé de l'axe de rotation (14) de l'outil (12).

16. Machine de fraisage à chant selon l'une des revendications 10 à 15, **caractérisée en ce que** l'élément de montage en palier (11) est réalisé pour former un axe de pivotement (16) sensiblement perpendiculaire à l'axe de rotation (14).
